# EUROPEAN PATENT SPECIFICATION

(11) **EP 1 669 227 B1**
(45) Date of publication and mention of the grant of the patent: **20.02.2008**
(21) Application number: 05026489.4
(22) Date of filing: 05.12.2005
(51) Int. Cl.: B60H 1/32

(54) **Air conditioner control device for vehicle and air conditioner control method therefor**
Regelungsanlage einer Klimaanlage für ein Fahrzeug und Klimasteuerverfahren dafür
Dispositif de commande d'une installation de conditionnement d'air pour véhicule et procédé associé de contrôle de l'installation

(30) Priority: 13.12.2004 JP 2004359800
(43) Date of publication of application: 14.06.2006
(73) Proprietor: Toyota Jidosha Kabushiki Kaisha, Toyota-shi, Aichi-ken, 471-8571 (JP)
(72) Inventor: Okamoto, Akio, Toyota-shi Aichi-ken, 471-8571 (JP)
(74) Representative: Kuhnen & Wacker

(56) References cited:
- JP-A- 8 127 229
- JP-A- 2000 073 810
- JP-A- 2003 104 046
- JP-A- 2003 276 416
- US-A1- 2003 196 442

## Description

### BACKGROUND OF THE INVENTION

### 1. Field of the Invention

The invention relates to an air conditioner control device for a vehicle, and an air conditioner control method therefor. More particularly, the invention relates to an air conditioner control device for a vehicle, which controls an air conditioner that is operated using power generated by an internal combustion engine in a vehicle including an automatically-controlled clutch provided between the internal combustion engine and a constant-mesh transmission, and a brake booster that reduces the amount of force required to depress a brake pedal, using an intake negative pressure in the internal combustion engine.

### 2. Description of the Related Art

Japanese Patent Application Publication No. JP-A-2003-276416 (hereinafter, referred to as "JP-A-2003-276416) discloses an air conditioner control device in a vehicle including an air conditioner operated by an internal combustion engine, and a brake booster mechanism that reduces the amount of force required to depress a brake pedal, using an intake negative pressure in the internal combustion engine.

The air conditioner control device for a vehicle restricts operation of the air conditioner for a predetermined time, and regulates the intake negative pressure to ensure that sufficient intake negative pressure is supplied to the brake booster mechanism when the brake is applied to decelerate the vehicle, the vehicle speed is in the range between a first preset speed and a higher second preset speed, the rate of change in the vehicle speed is equal to or greater than a preset value, and the intake negative pressure is equal to or less than a predetermined negative pressure required to operate the brake booster mechanism.

The air conditioner control device for a vehicle restricts operation of the air conditioner only when the force supplied by the brake booster mechanism is greatly increased by restricting operation of the air conditioner at the present vehicle speed and the brake force of the vehicle is determined to be insufficient based on the present rate of change in the vehicle speed and the present intake negative pressure. Thus, the frequency with which operation of the air conditioner is restricted can be reduced, driveability can be improved, and occupant comfort in the vehicle compartment is maintained.

Recently, particularly in Europe, vehicles with automatic transmissions that include a constant-mesh gear train and a clutch have been sold. Examples of vehicles with such an automatic transmission include vehicles in which shifting may be executed automatically, through a shift lever operated by the driver, or a combination of both shifting modes, in which the driver can select between the automatic and manual shifting modes.

In vehicles equipped with such an automatic transmission, a creep control (that may be referred to as "half-clutch control") is executed. This creep control is executed to place the clutch in the half-engaged state (so-called "half-clutch state"), and to control the rotational speed of the engine so that it remains constant when the vehicle runs at low speeds.

While this creep control is being executed, the slippage of the clutch changes depending on the temperature or the like of the clutch, and the engine load greatly varies. When the engine load is increased, and the execution of the creep control and the operation of auxiliary devices, such as an air conditioner, further increase the load, the creep control will need to increase the amount of air taken into the engine by opening the throttle valve so that the engine rotational speed can be kept constant.

This reduces the intake negative pressure in the intake pipe, which causes the negative pressure in the brake booster to become insufficient to reduce the amount of force required to depress the brake pedal using the intake negative pressure. As a result, the assist provided by the brake booster is significantly reduced, which increases the amount of force required to depress the brake pedal, and therefore driveability of the vehicle deteriorates. (In the preceding paragraphs and throughout the rest of the specification, the term "negative pressure" signifies the difference between the atmospheric pressure and the pressure in the intake pipe or the brake booster. When the pressure in the intake pipe or the brake booster is less than the atmospheric pressure, the value of the negative pressure is a positive value).

The air conditioner control device for a vehicle disclosed in JP-A-2003-276416 executes the control, without regard to the sufficiency of the negative pressure in the brake booster caused by variation of the engine load. Therefore, when the engine load greatly varies, the air conditioner may be started and stopped repeatedly and frequently.

Furthermore, there is known from JP 2000-073810 an air conditioning control device, upon which the preamble of appending claim 1 is based.

### SUMMARY OF THE INVENTION

It is an object of the invention to provide an air conditioner control device for a vehicle and an air conditioner control method for a vehicle that improves the driveability of a vehicle and allows the air conditioner to be operated stably using rotational force of an internal combustion engine.

A first aspect of the invention relates to an engine system for a vehicle, the engine system including an automatically-controlled clutch provided between an internal combustion engine and a constant-mesh transmission; and including a brake booster that reduces an amount of force required to depress a brake pedal, using an intake negative pressure in the internal combustion engine; and an air conditioner control device controlling an air conditioner that is operated using power generated by the internal combustion engine. The air conditioner control device includes stop control means for executing an air conditioner stop control to stop the air conditioner when a creep control is executed to place the clutch in a half-engaged state, and to control a rotational speed of the internal combustion engine so that the rotational speed remains constant.

According to an embodiment of the invention, the stop control means may execute the air conditioner stop control to stop the air conditioner when the brake pedal of the vehicle is depressed, the speed of the vehicle is lower than a predetermined speed, and the intake negative pressure is less than a first predetermined value.

The stop control means may terminate the air conditioner stop control when an accelerator pedal is depressed.

The stop control means may terminate the air conditioner stop control when the intake negative pressure exceeds a second predetermined value that is greater than the first predetermined value.

The stop control means may prevent the air conditioner from being started for a predetermined time after the air conditioner is stopped, and may prevent the air conditioner from being stopped for the predetermined time after the air conditioner is started.

The air conditioner device may further include an intake air pressure sensor provided in an intake pipe; and the intake air pressure sensor detects the intake negative pressure.

The air conditioner control device may further include a negative pressure sensor provided in the brake booster; and the negative pressure sensor detects the intake negative pressure.

The air conditioner control device may further include an air flow meter provided in the intake pipe; and the intake negative pressure may be estimated based on the amount of intake air in the intake pipe that is detected by the air flow meter, the rotational speed of the internal combustion engine, and the opening amount of a throttle valve provided in the intake pipe.

In the engine system for the vehicle according to the first aspect of the invention, the stop control means executes the air conditioner stop control while the creep control, which may cause the load on the internal combustion engine to greatly vary, is being executed. Therefore, an increase in the load on the internal combustion engine is suppressed. Thus, it is possible to suppress the reduction of the intake negative pressure due to the increase in the intake air amount when the load on the internal combustion engine increases.

Thus, according to the first aspect of the invention, the brake booster can reduce the amount of force required to depress the brake pedal, and the driveability of the vehicle can be improved. Also, repeated and frequent starting and stopping of the air conditioner due to the variation of the load of the internal combustion engine is avoided. Accordingly, the air conditioner can be stably operated.

In the air conditioner control device for a vehicle according to the first aspect of the invention, the stop control means executes the air conditioner stop control to stop the air conditioner when the brake pedal of the vehicle is depressed, the creep control is being executed, the speed of the vehicle is lower than a predetermined speed, and the intake negative pressure is less than a predetermined value. Thus, it is possible to avoid unnecessarily stopping the air conditioner, while suppressing an increase in the load on the internal combustion engine.

Thus, according to the first aspect of the invention, the driveability of the vehicle can be improved, the air conditioner can be operated stably, and the occupant can feel comfortable in the vehicle compartment using the air conditioner.

A second aspect of the invention relates to a method for an engine system for a vehicle, the engine system including an automatically-controlled clutch provided between an internal combustion engine and a constant-mesh transmission; and a brake booster that reduces the amount of force required to depress a brake pedal, using an intake negative pressure in the internal combustion engine. The air conditioner control method includes the step of controlling an air conditioner that is operated using power generated by the internal combustion engine. The air conditioner control method further includes the step of stopping the air conditioner while a creep control is being executed to place the clutch in a half-engaged state, and to control the rotational speed of the internal combustion engine so that the rotational speed remains constant.

The air conditioner may be stopped when the creep control is being executed to place the clutch in the half-engaged state and to control the rotational speed of the internal combustion engine so that the rotational speed remains constant, a brake pedal of the vehicle is depressed, the speed of the vehicle is lower than a predetermined speed, and the intake negative pressure is less than a predetermined value.

### BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:
FIG. 1 is a function block diagram of an engine system of a vehicle in a first embodiment of the invention;
FIG. 2 is a function block diagram of an air conditioner ECU shown in FIG. 1;
FIG. 3 is a function block diagram of an engine system of a vehicle in a second embodiment of the invention;
FIG. 4 is a function block diagram of an air conditioner ECU shown in FIG. 3;
FIG. 5 is a first flowchart of a control executed by an air conditioner stop control portion shown in FIG. 4; and
FIG. 6 is a second flowchart of the control executed by the air conditioner stop control portion shown in FIG. 4.

### DETAILED DESCRIPTION OF THE EXEMPLARY EMBODIMENTS

Hereinafter, example embodiments of the invention will be described in detail with reference to the drawings. In the drawings, the same or corresponding portions are denoted by the same reference numerals, and redundant description thereof will be omitted.

### First embodiment

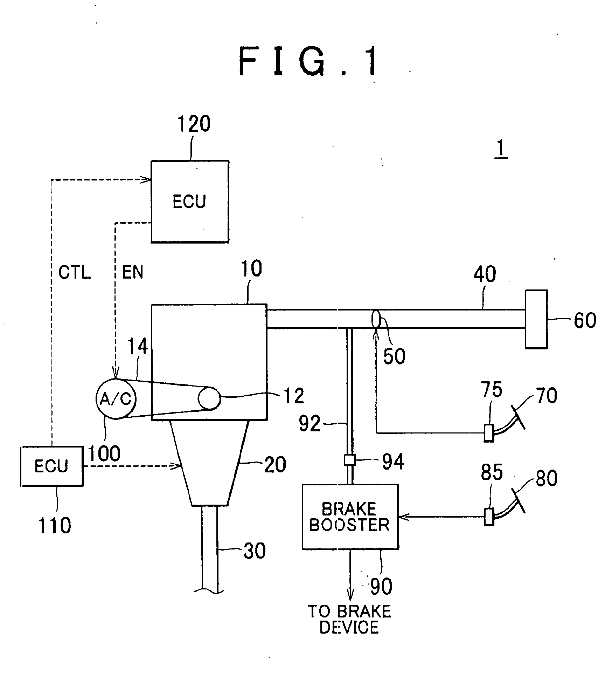

FIG. 1 is a function block diagram of an engine system of a vehicle according to a first embodiment. As shown in FIG. 1, an engine system 1 includes an engine 10, an automatic transmission 20, a propeller shaft 30, an intake pipe 40, a throttle valve 50, an air cleaner 60, an accelerator pedal 70, an accelerator pedal operation amount sensor 75, a brake pedal 80, a brake switch 85, a brake booster 90, a negative pressure pipe 92, a check valve 94, a compressor for an air conditioner (hereinafter, referred to as "air conditioner compressor") 100, a transmission ECU 110, and an air conditioner ECU 120.

The engine 10 generates power for the vehicle, and outputs the generated power to the automatic transmission 20. A crankshaft 12 of the engine 10 is connected to the air conditioner compressor 100 via a belt 14. The engine 10 outputs part of the generated power to the air conditioner compressor 100.

The automatic transmission 20 includes a constant-mesh gear train, and a clutch (not shown). The clutch allows and interrupts power transmission between the engine 10 and the gear train. The clutch may be, for example, a dry type single plate friction clutch. The automatic transmission 20 selects a shift speed according to the control instruction output from the transmission ECU 110, and changes torque and a rotational speed to be transmitted from the engine 10 to the propeller shaft 30. When the vehicle stops, the automatic transmission 20 disengages the clutch to interrupt power transmission between the engine 10 and the propeller shaft 30. When the vehicle is running, the automatic transmission 20 places the clutch in the engaged state or the half engaged state (half-clutch state) to transmit power from the engine 10 to the propeller shaft 30. An actuator that selects the shift speed in the automatic transmission 20 may be an electric actuator or a hydraulic actuator.

The intake pipe 40 is connected to a cylinder head (not shown) of the engine 10. Air passes through the intake pipe 40. The air is used to generate air-fuel mixture to be supplied to the engine 10. The throttle valve 50 is provided in the intake pipe 40. The throttle valve 50 adjusts the amount of air supplied to the engine 10 according to the position of the accelerator pedal 70. The air cleaner 60 is connected to the intake pipe 40. The air cleaner 60 removes foreign substances contained in the air supplied to the engine 10 through the intake pipe 40.

The brake booster 90 is connected to the intake pipe 40 via the negative pressure pipe 92. The brake booster 90 reduces the amount of force required to depress the brake pedal 80, using an intake negative pressure in the intake pipe 40 that is supplied to the brake booster 90 through the negative pressure pipe 92. The negative pressure pipe 92 is provided to supply the intake negative pressure in the intake pipe 40 to the brake booster 90. The check valve 94 is provided in the negative pressure pipe 92. The check valve 94 prevents the negative pressure accumulated in the brake booster 90 from being transmitted to the intake pipe 40.

The air conditioner compressor 100 is connected to the crank shaft 12 of the engine 10 via the belt 14. The air conditioner compressor 10 is operated using the power generated by the engine 10. The air conditioner compressor 100 is started/ stopped according to a signal EN output from the air conditioner ECU 120.

The transmission ECU 110 selects the shift speed to be achieved by the gear train in the automatic transmission 20, and controls the engagement of the clutch. The transmission ECU 110 executes a creep control when the vehicle runs at low speeds. More specifically, the transmission ECU 110 executes the creep control to place the clutch of the automatic transmission 20 in the half-engaged state, and to control the rotational speed of the engine so that the rotational speed remains constant while allowing the vehicle speed to change. Then, the transmission ECU 110 outputs a signal CTL to the air conditioner ECU 120. The signal CTL indicates whether the creep control is being executed.

The air conditioner ECU 120 executes a control to start or stop the air conditioner compressor 100 based on the on/off state of an air conditioner switch, the temperature in the vehicle compartment, the preset temperature of the air conditioner, and the signal CTL output from the transmission ECU 110. Then, the air conditioner ECU 120 generates the signal EN, and outputs the generated signal EN to the air conditioner compressor 100. The signal EN gives the instruction to start or stop the air conditioner compressor 100.

In this engine system 1, the throttle valve 50 adjusts the amount of air supplied to the engine 10 through the intake pipe 40. Fuel injected from a fuel injection device (not shown) is mixed with air, and the air-fuel mixture is supplied to the engine 10. Power is generated by combustion of the air-fuel mixture. The engine 10 outputs the power generated to the automatic transmission 20. The automatic transmission 20 changes the output torque and the rotational speed transmitted from the engine 10, according to the control instruction output from the transmission ECU 110. When the vehicle runs at low speeds, the creep control is executed to place the clutch in the half-engaged state in the automatic transmission 20.

Also, when the air conditioner compressor 100 is instructed to start based on the signal EN output from the air conditioner ECU 120, the engine 10 outputs part of the generated power to the air conditioner compressor 100. Thus, the air conditioner compressor 100 is operated using the power from the engine 10.

Further, in the engine system 1, the intake negative pressure generated in the intake pipe 40 is supplied to the brake booster 90 through the negative pressure pipe 92. The brake booster 90 reduces the amount of force required to depress the brake pedal 80, using the intake negative pressure supplied from the negative pressure pipe 92.

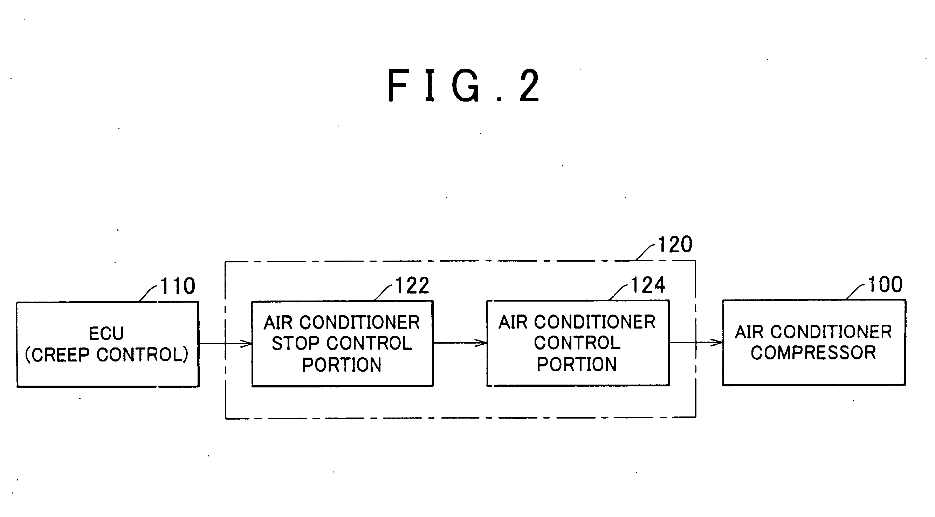

FIG. 2 is a function block diagram of the air conditioner ECU 120 shown in FIG. 1. As shown in FIG. 2, the air conditioner ECU 120 includes an air conditioner stop control portion 122, and an air conditioner control portion 124. The air conditioner stop control portion 122 receives the signal CTL output from the transmission ECU 110. The signal CTL indicates whether the creep control is being executed. When the level (logical level) of the signal CTL is high, that is, when the creep control is being executed, the air conditioner stop control portion 122 gives the air conditioner control portion 124 the stop instruction to stop the air conditioner. When the level (logical level) of the signal CTL is low, that is, when the creep control is not being executed, the air conditioner stop control portion 122 cancels the stop instruction sent to the air conditioner control portion 124.

The air conditioner control portion 124 determines whether to start the air conditioner based on the on/off state of the air conditioner switch, the temperature in the vehicle compartment, the preset temperature of the air conditioner, and the like. Then, the air conditioner control portion 124 outputs the signal EN to the air conditioner compressor 100. The logical level of the signal EN is set according to the result of the determination. When the air conditioner stop control portion 122 gives the air conditioner control portion 124 the stop instruction to stop the air condition, the air conditioner control portion 124 stops the air conditioner compressor 100. When the air conditioner stop control portion 122 does not give the air conditioner control portion 124 the stop instruction to stop the air conditioner, the air conditioner control portion 124 executes the control to start/stop the air conditioner compressor 100 based on the on/off state of the air conditioner switch, the temperature in the vehicle compartment, the preset temperature of the air conditioner, and the like.

When the creep control is executed, the air conditioner is stopped, because the clutch is placed in the half-engaged state by the creep control, and the engine load varies. In the case where the clutch load increases while the air conditioner compressor 100 that receives the power from the engine 10 is operated, the engine load increases to a large extent. In this case, the amount of the air taken into the engine 10 needs to be increased by opening the throttle valve 50, in order for the creep control to maintain a constant rotational speed of the engine 10. If the amount of the air taken into the engine 10 is increased by opening the throttle valve 50, the intake negative pressure is reduced, and sufficient negative pressure cannot be supplied to the brake booster 90. Thus, in the first embodiment, while the creep control is being executed, the air conditioner is stopped to suppress an increase in the engine load, and to obtain the negative pressure required to operate the brake booster 90.

Thus, in the first embodiment, while the creep control is being executed, the air conditioner ECU 120 stops the air conditioner, which suppresses the increase in the engine load. As a result, the reduction of the intake negative pressure is suppressed, and the negative pressure required to operate the brake booster 90 is obtained. Accordingly, the brake booster 90 can reduce the amount of force required to depress the brake pedal, and thereby improve the driveability of the vehicle.

When the creep control is executed, the load of the engine 10 varies due to the variation of the clutch load. However, because the air conditioner ECU 120 stops the air conditioner while the creep control is being executed, the air conditioner is prevented from being started and stopped repeatedly and frequently due to the variation of the load of the engine 10. Accordingly, the air conditioner can be operated stably.

### Second embodiment

In the first embodiment, the air conditioner is stopped while the creep control is being executed, irrespective of whether the negative pressure required to operate the brake booster 90 has been obtained. Therefore, in the first embodiment, the air conditioner may be unnecessarily stopped, and therefore the occupant may feel uncomfortable in the vehicle compartment. Thus, in the second embodiment, the stop instruction to stop the air conditioner is cancelled when a predetermined condition is satisfied even while the creep control is being executed.

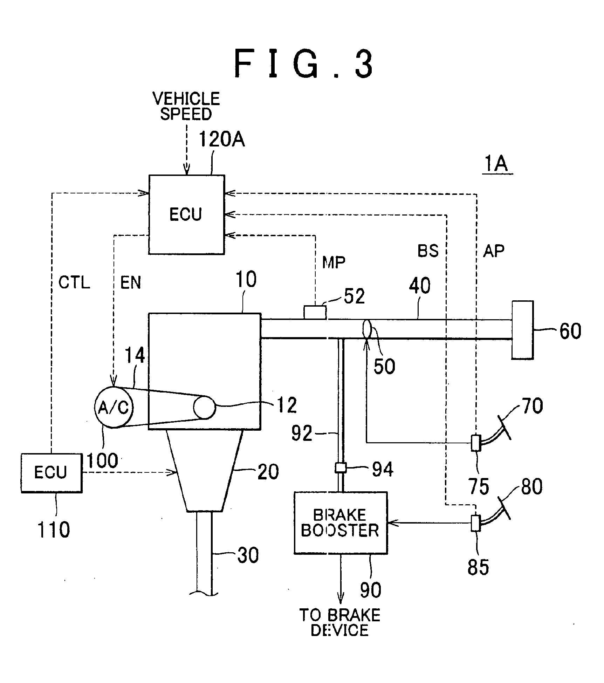

FIG. 3 is a function block diagram of an engine system of a vehicle according to the second embodiment of the invention. As shown in FIG. 3, the configuration of an engine system 1A in the second embodiment is the same as that of the engine system 1 in the first embodiment shown in FIG. 1, except that an intake pressure sensor 52 is further provided, and an air conditioner ECU 120A is provided instead of the air conditioner ECU 120. The intake pressure sensor 52 detects the intake negative pressure in the intake pipe 40, and outputs an intake negative pressure signal MP to the air conditioner ECU 120A, according to the detected intake negative pressure.

The air conditioner ECU 120A executes the control to start/stop the air conditioner compressor 100 based on the on/off state of the air conditioner switch, the temperature in the vehicle compartment, the preset temperature of the air conditioner, the signal CTL output from the transmission ECU 110, the intake negative pressure signal MP output from the intake pressure sensor 52, an accelerator pedal operation amount signal AP output from the accelerator pedal operation amount sensor 75, a brake operation signal SP output from the brake switch 85, and a vehicle speed signal detected by a vehicle speed sensor (not shown in the drawings). The accelerator pedal operation sensor 75 detects the operation amount of the accelerator pedal 70. The brake switch 85 detects whether the brake pedal 80 has been depressed. Then, the air conditioner ECU 120A generates the signal EN to give the instruction to start/stop the air conditioner compressor 100, and outputs the generated signal EN to the air conditioner compressor 100.

Other portions of the configuration of the engine system 1A are the same as those of the engine system 1 in the first embodiment shown in FIG. 1.

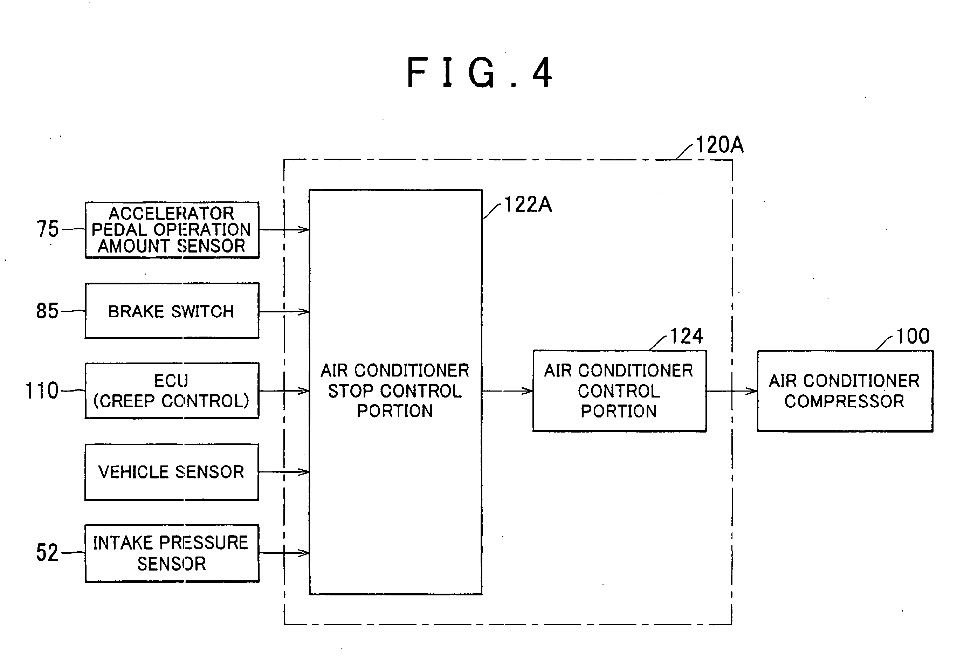

FIG. 4 is a function block diagram of the air conditioner ECU 120A shown in FIG. 3. As shown in FIG. 4, the configuration of the air conditioner ECU 120A is the same as that of the air conditioner ECU 120 shown in FIG. 2, except that an air conditioner stop control portion 122A is provided, instead of the air conditioner stop control portion 122.

The air conditioner stop control portion 122A determines whether to stop the air conditioner by the method described below, based on the signal CTL output from the transmission ECU 110, the intake negative pressure signal MP output from the intake pressure sensor 52, the accelerator pedal operation amount signal AP output from the accelerator pedal operation amount sensor 75, the brake operation signal SP output from the brake switch 85, and the vehicle signal output from the vehicle speed sensor. The air conditioner stop control portion 122A outputs the result of the determination to the air conditioner control portion 124. Also, while the air conditioner stop control portion 122A is giving the air conditioner control portion 124 the stop instruction to stop the air condition, the air conditioner stop control portion 122A determines whether to cancel the stop instruction by the method described below, and outputs the result of the determination to the air conditioner control portion 124.

The air conditioner stop control portion 122A determines whether to stop the air conditioner using the intake negative pressure signal MP output from the intake pressure sensor 52 for the following reason. When there is sufficient intake negative pressure to operate the brake booster 90 while the air conditioner is operated, the air conditioner does not need to be stopped.

The air conditioner stop control portion 122A determines whether to stop the air conditioner using the accelerator pedal operation amount signal AP output from the accelerator pedal operation amount sensor 75 for the following reason. When the accelerator pedal 70 is depressed, the brake pedal 80 is not depressed, and the brake booster 90 is not operated. Therefore, the air conditioner does not need to be stopped in order to obtain the negative pressure required to operate the brake booster 90.

Also, the air conditioner stop control portion 122A determines whether to stop the air conditioner using the brake operation signal BS output from the brake switch 85 for the following reason. The brake booster 90 needs the negative pressure when the brake pedal 80 is depressed. If the brake pedal 80 is not depressed, no problem occurs even if the engine load increases due to the operation of the air conditioner, and the intake negative pressure is reduced due to the increase in the engine load.

The air conditioner stop control portion 122A determines whether to stop the air conditioner using the vehicle speed signal output from the vehicle speed sensor for the following reason. It can be determined whether the creep control is being executed based on the vehicle speed. That is, the creep control is executed to place the clutch in the half-engaged state, and the vehicle speed at which the creep control can be executed is set for each shift speed of the automatic transmission 20. Therefore, it can be determined whether the creep control is being executed based on the vehicle speed and the selected shift speed.

When the air conditioner stop control portion 122A gives the air conditioner control portion 124 the instruction to stop the air conditioner, the air conditioner control portion 124 stops the air conditioner compressor 100. When the air conditioner stop control portion 122A cancels the stop instruction, the air conditioner control portion 124 executes the control to start/stop the air conditioner compressor 100 based on the on/off state of the conditioner switch, the temperature in the vehicle compartment, the preset temperature of the air conditioner, and the like.

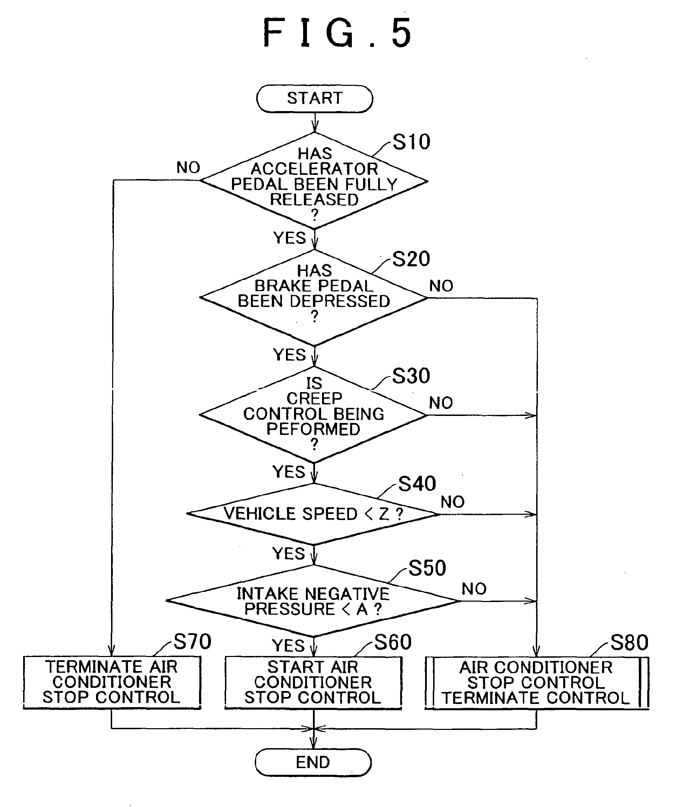

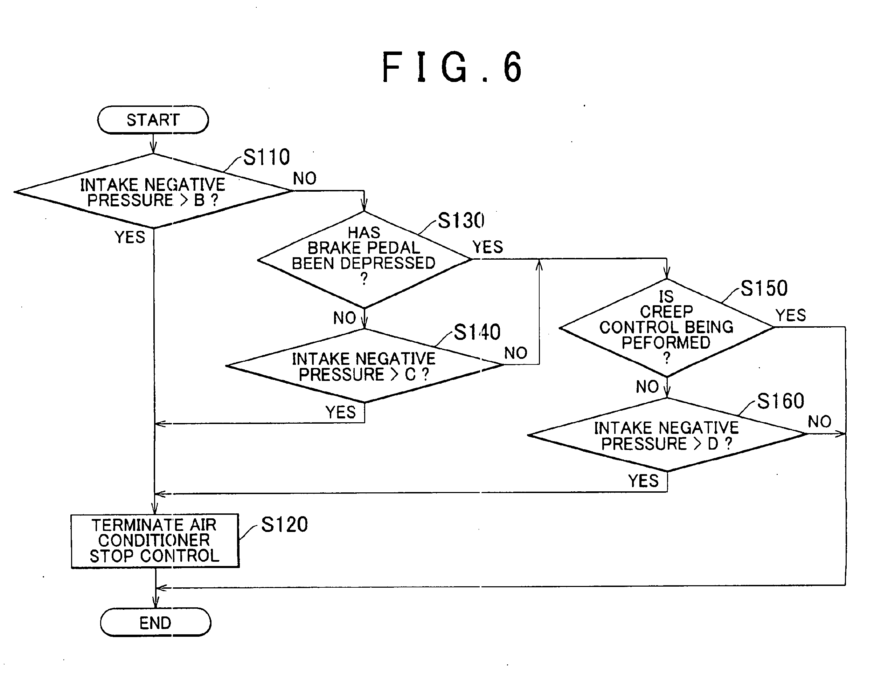

Each of FIG. 5 and FIG. 6 shows the flowchart of the control performed by the air conditioner stop control portion 122A shown in FIG. 4. FIG. 5 is the flowchart of the control for determining whether to perform an air conditioner stop control. FIG. 6 is the flowchart of the control for determining whether to terminate the air conditioner stop control. The air conditioner stop control is the control for stopping the air conditioner.

As shown in FIG. 5, the air conditioner stop control portion 122A determines whether the accelerator pedal 70 has been fully released, based on the accelerator pedal operation amount signal AP output from the accelerator pedal operation amount sensor 75 (step S10). When it is determined that the accelerator pedal 70 has not been fully released (NO in step S10), if the air conditioner stop control is being performed, the air conditioner stop control portion 122A cancels the stop instruction sent to the air conditioner control portion 124, and terminates the air conditioner stop control (step S70).

When determining that the accelerator pedal 70 has been fully released in step S10 (YES in step S10), the air conditioner stop control portion 122A determines whether the brake pedal 80 is depressed, based on the brake operation signal SP output from the brake switch 85 (step S20). When determining that the brake pedal 80 has not been depressed (NO in step S20), the air conditioner stop control portion 122A performs an air conditioner stop control terminate control for determining whether to terminate the air conditioner stop control if the air conditioner stop control is being performed (step S80). The air conditioner stop control terminate control will be described in detail later.

If it is determined that the brake pedal 80 is depressed in step S20 (YES in step S20), the air conditioner control portion 122A determines whether the creep control is being executed based on the signal CTL output from the transmission ECU 110 (step S30). If it is determined that the creep control is not being executed (NO in step S30), the air conditioner stop control portion 122A executes the process in step S80.

If it is determined that the creep control is being executed in step S30 (YES in step S30), the air conditioner stop control portion 122A reads a determination value Z from ROM (Read Only Memory), and determines whether the vehicle speed is lower than the determination value Z, based on the vehicle signal output from the vehicle speed sensor (step S40). The determination value Z is used to determine whether the creep control can be executed at the present vehicle speed. The determination value .is set in advance for each shift speed. The air conditioner stop control portion 122A compares the vehicle speed with the determination value Z corresponding to the shift speed that is presently selected. If it is determined that the vehicle speed is equal to or higher than the determination value Z (NO in step S40), the air conditioner stop control portion 122A executes the process in step S80.

If it is determined that the vehicle speed is lower than the determination value Z in step S40 (YES in step S40), the air conditioner stop control portion 122A reads from the ROM a determination value A concerning the intake negative pressure in the intake pipe 40, and determines whether the intake negative pressure in the intake pipe 40 is less than the determination value A, based on the intake negative pressure signal MP output from the intake pressure sensor 52 (step S50).

If it is determined that the intake negative pressure is less than the determination value A (YES in step S50), the air conditioner stop control portion 122A determines that the negative pressure required to operate the brake booster 90 cannot be obtained. Then, the air conditioner stop control portion 122A starts the air conditioner stop control, and sends the air conditioner control portion 124 the stop instruction to stop the air conditioner (step S60). If it is determined that the intake negative pressure is equal to or greater than the determination value A (NO in step S50), the air conditioner stop control portion 122A executes the process in step S80.

Next, the processes of the air conditioner stop control terminate control in step S80 in FIG. 5 will be described.

As shown in FIG. 6, the air conditioner stop control portion 122A reads from the ROM a determination value B concerning the intake negative pressure in the intake pipe 40, and determines whether the intake negative pressure in the intake pipe 40 is greater than the determination value B, based on the intake negative pressure signal MP output from the intake pressure sensor 52 (step S110). For example, the determination value B is set so that the negative pressure does not become insufficient in the brake booster 90 even if the brake pedal is intermittently depressed several times. Thus, the air conditioner stop control is prevented from being started and terminated repeatedly, and the air conditioner is prevented from being started and stopped repeatedly and frequently when the brake pedal is intermittently depressed several times.

If it is determined that the intake negative pressure in the intake pipe 40 is greater than the determination value B (YES in step S110), the air conditioner stop control portion 122A cancels the stop instruction sent to the air conditioner control portion 124, and terminates the air conditioner stop control (step S120).

If it is determined that the intake negative pressure in the intake pipe 40 is equal to or less than the determination value B (NO in step S110), the air conditioner stop control portion 122A determines whether the brake pedal 80 is depressed based on the brake operation signal SP output from the brake switch 85 (step S130). If it is determined that the brake pedal 80 is depressed (NO in step S130), the air conditioner stop control portion 122A reads from the ROM a determination value C concerning the intake negative pressure in the intake pipe 40, and determines whether the intake negative pressure in the intake pipe 40 is greater than the determination value C based on the intake negative pressure signal MP output from the intake pressure sensor 52 (step S140).

The determination value C is set so that the air conditioner stop control is terminated as soon as the brake pedal 80 is released, in order to minimize the possibility that the air conditioner stop control continues for a long period. More specifically, when the intake negative pressure in the intake pipe 40 is greater than the determination value C, it can be determined that there is sufficient intake negative pressure for the brake booster 90 to reduce the amount of force required to depress the brake pedal once next time. Also, the determination value C is set to a value less than the determination value B.

If it is determined that the intake negative pressure in the intake pipe 40 is greater than the determination value C (YES in step S140), the air conditioner stop control portion 122A terminates the air conditioner stop control (step S120).

If it is determined that the negative pressure in the intake pipe 40 is equal to or less than the determination value C in step S140 (NO in step S140), the air conditioner stop control portion 122A determines whether the creep control is being executed based on the signal CTL output from the transmission ECU 110 (step S150). If it is determined that the creep control is being executed (YES in step S150), the air conditioner stop control portion 122A terminates the air conditioner stop control terminate control without terminating the air conditioner stop control.

If it is determined that the creep control is not being executed in step S150 (NO in step S150), the air conditioner stop control portion 122A reads from the ROM a determination value D concerning the intake negative pressure in the intake pipe 40, and determines whether the intake negative pressure in the intake pipe 40 is greater than the determination value D based on the intake negative pressure signal MP output from the intake pressure sensor 52 (step S160).

The determination value D is set so that the sufficient negative pressure can be supplied to the brake booster 90. When the air conditioner stop control portion 122A determines that the brake pedal 80 is depressed in step S130, and determines that the creep control is not being executed in step S150, the vehicle stops in most cases. Therefore, there is no need to consider the possibility that the brake pedal is intermittently depressed several times. Thus, the determination value C is set to a value less than the determination value B.

When determining that the intake negative pressure in the intake pipe 40 is greater than the determination value D in step S160 (YES in step S160), the air conditioner stop control portion 122A terminates the air conditioner stop control (step S120). When determining that the intake negative pressure in the intake pipe 40 is equal to or less than the determination value D in step S160 (NO in step S160), the air conditioner stop control portion 122A terminates the air conditioner stop control terminate control without terminating the air conditioner stop control.

In order to prevent the air conditioner stop control from being started and stopped repeatedly and frequently when the intake negative pressure is near the determination value A that is used to determine whether to start the air conditioner stop control, each of the determination values B to D that are used in the air conditioner stop control terminate control is set to a value somewhat greater than the determination value A.

Each of the determination values A to D may be a constant value, or may vary depending on the vehicle speed or the atmospheric pressure.

In the aforementioned embodiment, the determination values A to D are used as criteria concerning the intake negative pressure, in order to reduce the frequency with which the air conditioner is started and stopped. However, the air conditioner may be prevented from starting for a predetermined time after the air conditioner is stopped, and the air conditioner may be prevented from stopping for the predetermined time after the air conditioner is started by a simpler method.

In the aforementioned embodiment, the intake pressure sensor 52 detects the intake negative pressure MP in the intake pipe 40. However, a negative pressure sensor or the like may directly detect the negative pressure in the brake booster 90, and the air conditioner stop control portion 122A may base its determination on the negative pressure in the brake booster 90, instead of the intake negative pressure MP output from the intake pressure sensor 52. Alternatively, an intake air amount sensor such as an air flow meter may detect the amount of air taken into the engine through the intake pipe 40, and the intake negative pressure in the intake pipe 40 may be estimated using the detected intake air amount, the rotational speed of the engine 10, and the opening amount of the throttle valve 50.

As described above, in the second embodiment, the air conditioner ECU 120A stops the air conditioner when the brake pedal 80 is depressed, the creep control is being executed, the vehicle speed is lower than the determination value Z, and the intake negative pressure in the intake pipe 40 is less than the determination value A. Thus, the increase in the engine load can be suppressed without unnecessarily stopping the air conditioner. Accordingly, the driveability of the vehicle can be improved, and the air conditioner can perform the air-conditioning function sufficiently.

Also, when the air conditioner stop control is terminated, the determination values B to D that are different from the determination value A are used as the criteria for the intake negative pressure. Therefore, the air conditioner is prevented from being started and stopped repeatedly and frequently. Thus, the air conditioner is operated stably.

In the aforementioned embodiments, the air conditioner ECUs 120 and 120A correspond to "the air conditioner control device for a vehicle" and "the air conditioner control device". The air conditioner stop control portions 122 and 122A correspond to "the stop control means". The transmission ECU 110 corresponds to "the clutch control device".

Thus, the embodiments of the invention disclosed in the specification are illustrative. It should be understood and appreciated that one skilled in the art would understand that the invention should not be restricted to the particulars of the embodiments described. The technical scope of the invention is defined by claims, and all changes which come within the meaning and range of equivalency of the claims are therefore intended to be embraced therein.

## Claims

1. An engine system for a vehicle, the engine system including an automatically-controlled clutch provided between an internal combustion engine (10) and a constant-mesh transmission; a brake booster (90) that reduces an amount of force required to depress a brake pedal (80), using an intake negative pressure in the internal combustion engine (10); and an air conditioner control device controlling an air conditioner (100) that is operated using power generated by the internal combustion engine (10), **characterized by**
stop control means (122, 122A) which executes an air conditioner stop control to stop the air conditioner (100) when a creep control is executed to place the clutch in a half-engaged state, and to control a rotational speed of the internal combustion engine (10) so that the rotational speed remains constant.

2. The engine system according to claim 1, wherein the stop control means (122, 122A) executes the air conditioner stop control to stop the air conditioner (100) when the brake pedal (80) of the vehicle is depressed, a speed of the vehicle is lower than a predetermined speed, and the intake negative pressure is less than a first predetermined value.

3. The engine system according to claim 1 or 2, wherein the stop control means (122, 122A) terminates the air conditioner stop control when an accelerator pedal (70) is depressed.

4. The engine system according to any one of claims 1 through 3, wherein the stop control means (122, 122A) terminates the air conditioner stop control when the intake negative pressure exceeds a second predetermined value that is greater than the first predetermined value.

5. The engine system according to any one of claims 1 through 4, wherein the stop control means (122, 122A) prohibits the air conditioner (100) from being started for a predetermined time after the air conditioner (100) is stopped, and prohibits the air conditioner (100) from being stopped for the predetermined time after the air conditioner (100) is started.

6. The engine system according to any one of claims 2 through 5, further comprising an intake air pressure sensor provided in an intake pipe (40), wherein the intake air pressure sensor detects the intake negative pressure.

7. The engine system according to any one of claims 2 through 5, further comprising a negative pressure sensor provided in the brake booster (90), wherein the negative pressure sensor detects the intake negative pressure.

8. The engine system according to any one of claims 2 through 5, further comprising an air flow meter provided in an intake pipe (40), wherein the intake negative pressure is estimated based on an amount of intake air in the intake pipe (40) that is detected by the air flow meter, the rotational speed of the internal combustion engine (10), and an opening amount of a throttle valve (50) provided in the intake pipe (40).

9. A method for an engine system of a vehicle, the engine system including an automatically-controlled clutch provided between an internal combustion engine (10) and a constant-mesh transmission; a brake booster (90) that reduces an amount of force required to depress a brake pedal (80), using an intake negative pressure in the internal combustion engine (10); and an air conditioner (100), the method including the step of controlling the air conditioner (100) that is operated using power generated by the internal combustion engine (10), the method **characterized by** further comprising the step of
stopping the air conditioner (100) when a creep control is executed to place the clutch in a half-engaged state, and to control a rotational speed of the internal combustion engine (10) so that the rotational speed remains constant.

10. The method according to claim 9, wherein the air conditioner (100) is stopped in a case where the creep control is being executed to place the clutch in the half engaged state and to control the rotational speed of the internal combustion engine (10) so that the rotational speed remains constant, a brake pedal (80) of the vehicle is depressed, a speed of the vehicle is lower than a predetermined speed, and the intake negative pressure is less than a predetermined value.

## Patentansprüche

1. Verbrennungsmotorsystem für ein Fahrzeug, wobei das Verbrennungsmotorsystem eine automatisch gesteuerte Kupplung beinhaltet, die zwischen einem Verbrennungsmotor (10) und einem Getriebe mit Dauereingriff angeordnet ist; einen Bremskraftverstärker (90), der einen Betrag einer Kraft, die zum Verstellen eines Bremspedals (80) erforderlich ist, unter Verwendung eines Eingabe-Unterdrucks im Verbrennungsmotor (10) reduziert; und eine Klimaanlagen-Steuerungsvorrichtung, die eine Klimaanlage (100) steuert, die unter Verwendung einer Leistung gesteuert wird, die durch einen Verbrennungsmotor (10) erzeugt wird, **gekennzeichnet durch**
eine Stoppsteuerungseinrichtung (122, 122A), die eine Klimaanlagen-Stoppsteuerung ausführt, um die Klimaanlage (100) zu stoppen, wenn eine Kriechsteuerung ausgeführt wird, um die Kupplung in einen halbeingerückten Zustand zu versetzen, und um eine Drehzahl des Verbrennungsmotors (10) zu steuern, so dass die Drehzahl konstant bleibt.

2. Verbrennungsmotorsystem nach Anspruch 1, wobei die Stoppsteuerungseinrichtung (122, 122A) die Klimaanlagen-Stoppsteuerung ausführt, um die Klimaanlage (100) zu stoppen, wenn das Bremspedal (80) des Fahrzeugs verstellt wird, eine Geschwindigkeit des Fahrzeugs geringer ist als eine vorbestimmte Geschwindigkeit und der Eingabe-Unterdruck geringer ist als ein erster vorbestimmter Wert.

3. Verbrennungsmotor nach Anspruch 1 oder 2, wobei die Stoppsteuerungseinrichtung (122, 122A) die Klimaanlagen-Stoppsteuerung beendet, wenn ein Fahrpedal (70) verstellt wird.

4. Verbrennungsmotorsystem nach einem der Ansprüche 1 bis 3, wobei die Stoppsteuerungseinrichtung (122, 122A) die Klimaanlagen-Stoppsteuerung beendet, wenn der Eingabe-Unterdruck einen zweiten vorbestimmten Wert überschreitet, der größer ist als der erste vorbestimmte Wert.

5. Verbrennungsmotorsystem nach einem der Ansprüche 1 bis 4, wobei die Stoppsteuerungseinrichtung (122, 122A) der Klimaanlage (100) eine vorbestimmte Zeit lang untersagt, gestartet zu werden, nachdem die Klimaanlage (100) gestoppt worden ist, und der Klimaanlage (100) für eine vorbestimmte Zeit lang untersagt, gestoppt zu werden, nachdem die Klimaanlage (100) gestartet worden ist.

6. Verbrennungsmotorsystem nach einem der Ansprüche 2 bis 5, das ferner einen Saugluftdrucksensor aufweist, der in einer Saugleitung (40) angeordnet ist, wobei der Saugluftdrucksensor den Eingabe-Unterdruck erfasst.

7. Verbrennungsmotorsystem nach einem der Ansprüche 2 bis 5, das ferner einen Unterdrucksensor aufweist, der im Bremskraftverstärker (90) angeordnet ist, wobei der Unterdrucksensor den Eingabe-Unterdruck erfasst.

8. Verbrennungsmotorsystem nach einem der Ansprüche 2 bis 5, das ferner einen Luftströmungsmesser aufweist, der in einer Saugleitung (40) angeordnet ist, wobei der Eingabe-Unterdruck basierend auf einem Betrag einer Saugluft der Saugleitung (40), die durch den Luftströmungsmesser erfasst wird, der Drehzahl des Verbrennungsmotors (10) und eines Öffnungsbetrags eines Drosselventils (50), das in der Saugleitung (40) angeordnet ist, geschätzt wird.

9. Verfahren für ein Verbrennungsmotorsystem für ein Fahrzeug, wobei das Verbrennungsmotorsystem eine automatisch gesteuerte Kupplung beinhaltet, die zwischen einem Verbrennungsmotor (10) und einem Getriebe mit Dauereingriff angeordnet ist; einen Bremskraftverstärker (90), der einen Betrag einer Kraft, die zum Verstellen eines Bremspedals (80) erforderlich ist, unter Verwendung eines Eingabe-Unterdrucks im Verbrennungsmotor (10) reduziert; und eine Klimaanlage (100), wobei das Verfahren den Schritt zum Steuern der Klimaanlage (100) beinhaltet, die unter Verwendung einer Leistung gesteuert wird, die durch einen Verbrennungsmotor (10) erzeugt wird, wobei das Verfahren **gekennzeichnet ist durch** den Schritt des
Stoppens der Klimaanlage (100), wenn eine Kriechsteuerung ausgeführt wird, um die Kupplung in einen halbeingerückten Zustand zu versetzen, und um eine Drehzahl des Verbrennungsmotors (10) zu steuern, so dass die Drehzahl konstant bleibt.

10. Verfahren nach Anspruch 9, wobei die Klimaanlage (100) in einem Fall gestoppt wird, in dem die Kriechsteuerung ausgeführt wird, um die Kupplung in den halbeingerückten Zustand zu versetzen und um die Drehzahl des Verbrennungsmotors (10) zu steuern, so dass die Drehzahl konstant bleibt, ein Bremspedal (80) des Fahrzeugs verstellt wird, eine Geschwindigkeit des Fahrzeugs geringer ist als eine vorbestimmte Geschwindigkeit und der Eingabe-Unterdruck geringer als ein vorbestimmter Wert ist.

## Revendications

1. Système de moteur pour un véhicule, le système de moteur incluant un embrayage commandé automatiquement fourni entre un moteur à combustion interne (10) et une transmission en prise constante; un servofrein (90) qui réduit une quantité de force requise pour appuyer sur une pédale de frein (80), en utilisant une pression négative d'admission dans le moteur à combustion interne (10); et un dispositif de commande de climatiseur commandant un climatiseur (100) qui est exploité en utilisant une puissance générée par le moteur à combustion interne (10), **caractérisé par**
un moyen de commande d'arrêt (122, 122A) qui exécute une commande d'arrêt de climatiseur pour arrêter le climatiseur (100) lorsqu'une commande de glissement est exécutée pour mettre l'embrayage dans un état semi-engagé, et pour commander une vitesse de rotation du moteur à combustion interne (10) de sorte que la vitesse de rotation reste constante.

2. Système de moteur selon la revendication 1, dans lequel le moyen de commande d'arrêt (122, 122A) exécute la commande d'arrêt de climatiseur pour arrêter le climatiseur (100) lorsque l'on appuie sur la pédale de frein (80) du véhicule, une vitesse du véhicule est inférieure à une vitesse prédéterminée, et la pression négative d'admission est inférieure à une première valeur prédéterminée.

3. Système de moteur selon la revendication 1 ou 2, dans lequel le moyen de commande d'arrêt (122, 122A) achève la commande d'arrêt de climatiseur lorsqu'on appuie sur une pédale d'accélérateur (70).

4. Système de moteur selon l'une quelconque des revendications 1 à 3, où le moyen de commande d'arrêt (122, 122A) achève la commande d'arrêt de climatiseur lorsque la pression négative d'admission dépasse une deuxième valeur prédéterminée qui est supérieure à la première valeur prédéterminée.

5. Système de moteur selon l'une quelconque des revendications 1 à 4, dans lequel le moyen de commande d'arrêt (122, 122A) empêche le climatiseur (100) d'être démarré pendant une durée prédéterminé après arrêt du climatiseur (100), et empêche le climatiseur (100) d'être arrêté pendant la durée prédéterminée après démarrage du climatiseur (100).

6. Système de moteur selon l'une quelconque des revendications 2 à 5, comprenant en plus un capteur de pression d'air d'admission fourni dans un tuyau d'admission (40), dans lequel le capteur de pression d'air d'admission détecte la pression négative d'admission.

7. Système de moteur selon l'une quelconque des revendications 2 à 5, comprenant en plus un capteur de pression négative fourni dans le servofrein (90), dans lequel le capteur de pression négative détecte la pression négative d'admission.

8. Système de moteur selon l'une quelconque des revendications 2 à 5, comprenant en plus un débitmètre d'air fourni dans un tuyau d'admission (40), dans lequel la pression négative d'admission est estimée sur la base d'une quantité d'air d'admission dans le tuyau d'admission (40) qui est détectée par le débitmètre d'air, de la vitesse de rotation du moteur à combustion interne (10), et d'une quantité d'ouverture d'un papillon des gaz (50) fournie dans le tuyau d'admission (40).

9. Procédé pour un système de moteur pour un véhicule, le système de moteur incluant un embrayage à commande automatique pourvu entre un moteur à combustion interne (10) et une transmission en prise constante; un servofrein (90) qui réduit une quantité de force requise pour appuyer sur une pédale de frein (80), en utilisant une pression négative d'admission dans le moteur à combustion interne (10), et un climatiseur (100), le procédé incluant l'étape consistant à commander le climatiseur (100) qui est exploité en utilisant une puissance générée par le moteur à combustion interne (10), le procédé **caractérisé par** le fait de comprendre en plus l'étape de
arrêter le climatiseur (100) lorsqu'une commande de glissement est exécutée pour mettre l'embrayage dans un état semi-engagé, et pour commander une vitesse de rotation du moteur à combustion interne (10) de sorte que la vitesse de rotation reste constante.

10. Procédé selon la revendication 9, dans lequel le climatiseur (100) est arrêté dans un cas où la commande de glissement est en cours d'exécution pour mettre l'embrayage dans l'état semi-engagé et pour commander la vitesse de rotation du moteur à combustion interne (10) de sorte que la vitesse de rotation reste constante, on appuie sur une pédale de frein (80) du véhicule, une vitesse du véhicule est inférieure à une vitesse prédéterminée, et la pression négative d'admission est inférieure à une valeur prédéterminée.
